# EUROPÄISCHE PATENTSCHRIFT

(11) **EP 2 647 512 B1**
(45) Veröffentlichungstag und Bekanntmachung des Hinweises auf die Patenterteilung: **20.02.2019**
(21) Anmeldenummer: 13161255.8
(22) Anmeldetag: 27.03.2013
(51) Int. Cl.: B60G 7/00, B60G 9/00, B62D 61/12

(54) **Achslenker**
Axle guide
Guide d'essieu

(30) Priorität: 02.04.2012 DE 102012102848
(43) Veröffentlichungstag der Anmeldung: 09.10.2013
(73) Patentinhaber: BPW Bergische Achsen KG, 51674 Wiehl (DE)
(72) Erfinder: Kopplow, Hans Werner, 51588 Nümbrecht (DE); Kriegeskotte, Thomas, 51580 Reichshof (DE); Michels, Manfred, 51067 Köln (DE)
(74) Vertreter: Bungartz Christophersen Partnerschaft mbB Patentanwälte

(56) Entgegenhaltungen:
- EP-A1- 2 502 809
- DE-A1-102011 001 431
- US-A- 5 655 788

## Beschreibung

Die Erfindung betrifft einen Achslenker für eine bei Nichtgebrauch mittels eines Achslifts anhebbare Fahrzeugachse, wobei achslenkerseitiger Bestandteil des Achslifts eine starr an dem Achslenker befestigte Konsole ist, an der eine Druckaufnahme zur Anlage eines Kraftglieds des Achslifts ausgebildet ist.

Aus der US 4,773,670 ist eine Vorrichtung zum Anheben einer Fahrzeugachse unter Verwendung einer Luftfeder als Kraftglied bekannt. Dessen unteres Ende ist fahrzeugfest, wohingegen sich das obere Ende gegen eine Konsole abstützt, die an der Unterseite des die Achse führenden Längslenkers fest angeschweißt ist. Über Bolzen ist die Luftfeder dauernd mit der Konsole verbunden, wodurch die Luftfeder und damit das Kraftglied der Anhebevorrichtung im Fahrbetrieb jede Einfederung des Fahrwerks unmittelbar mitmacht. Dies führt auf Dauer zu einer hohen mechanischen Beanspruchung der Anhebevorrichtung und deren Einzelteilen.

Eine ähnliche Vorrichtung zum Anheben einer Fahrzeugachse unter Verwendung einer Luftfeder als Kraftglied ist aus der US 5,655,788 bekannt. Dessen unteres Ende ist fahrzeugfest, wohingegen sich das obere Ende gegen eine durch zwei miteinander verschraubte Schalen mit dem Achslenker verbundene Konsole abstützt. Über eine weitere Verschraubung ist die Luftfeder dauernd mit der Konsole verbunden, wodurch die Luftfeder und damit das Kraftglied der Anhebevorrichtung im Fahrbetrieb jede Einfederung des Fahrwerks unmittelbar mitmacht. Dies führt auf Dauer zu einer hohen mechanischen Beanspruchung der Anhebevorrichtung und deren Einzelteilen.

Bekannt sind auch Anhebevorrichtungen bzw. Achslifte, deren Kraftglied nicht in dauernder Verbindung mit dem Achslenker steht. Derartige Vorrichtungen sind zum Beispiel aus der EP 2 502 809 A1, der DE 203 17 350 U1, der DE 10 2006 015 671 A1 und der DE 10 2006 015 672 A1 bekannt. Diese Achslifte bestehen aus zwei mechanisch getrennten Hauptbestandteilen, nämlich erstens einem als Membranzylinder gestalteten, unter der Stütze der Achsaufhängung befestigten Kraftglied mit stempelartiger Druckübertragung, und zweitens einer ein Widerlager bildenden Druckaufnahme an dem Achslenker, gegen die also die Druckübertragung nur bei der Betätigung des Kraftgliedes zur Anlage kommt. Die Druckaufnahme am Achslenker besteht bei dem Achslift nach der DE 203 17 350 U1 in einer Vertiefung in Gestalt einer Kalotte in der Unterseite des Achslenkers. Hingegen bestehen die Druckaufnahmen bei den Achsliften nach der DE 10 2006 015 671 A1 und der DE 10 2006 015 672 A1 in einer speziell gestalteten Kontur an der Unterseite des Achslenkers. Diese Kontur ist bei der DE 10 2006 015 671 A1 im Gussmaterial des Achslenkers mit angeformt, und bei der DE 10 2006 015 672 A1 an Schalen mit angeformt, aus denen der Achslenker besteht.

Bei Schwerlast-Nutzfahrzeugen, bei denen solche Anhebevorrichtungen in erster Linie Anwendung finden, erfordern unterschiedliche Fahrzeugtypen auch unterschiedliche Fahrhöhen. Unter der Fahrhöhe versteht der Fachmann den vertikalen Abstand zwischen der Unterseite des Fahrzeuglängsträgers, und dem Mittelpunkt der Achse. In den Programmen der Achshersteller werden gleiche Achslenker häufig mit unterschiedlich hohen Stützen, Luftfederbälgen oder unterschiedlich verkröpften Luftfederkonsolen kombiniert. Dadurch kann der Schwenkbereich, also der minimale und der maximale Winkel des Längslenkers in Bezug auf die Stütze, einmal geringer, und ein anderes Mal größer ausfallen. Aufgrund dieser Gegebenheiten und für einen möglichst breiten Einsatzbereich ist es wünschenswert die Anhebevorrichtung in ihren für die Funktion maßgeblichen Maßen bzw. Geometrien anpassbar zu gestalten.

Der Erfindung liegt daher die Aufgabe zugrunde, bei einem Achslenker zu einer einfachen Anpassung der für die ordnungsgemäße Funktion der Anhebevorrichtung notwendigen Maße bzw. Geometrien unter Beibehaltung der Bauart des Achslenkers zu kommen.

Zur **Lösung** dieser Aufgabe wird bei einem Achslenker mit den eingangs angegebenen Merkmalen vorgeschlagen, dass Bestandteile der Konsole ein gegen die eine Seite des Achslenker abgestütztes erstes Halteteil, ein gegen die andere Seite des Achslenkers abgestütztes zweites Halteteil, und ein die beiden Halteteile verbindendes Zugelement sind, und dass das Zugelement als eine unterhalb des Achslenkers angeordnete Querachse ausgebildet ist.

Erfindungsgemäß befindet sich die achslenkerseitige Druckaufnahme, an der bei der Betätigung des Achslifts die Hebekräfte angreifen, an einer an dem Achslenker befestigbaren Konsole. Diese lässt sich mit wenigen Handgriffen am Achslenker befestigen und ist in der Lage, im Betrieb die erheblichen Anhebekräfte sicher zu übertragen. Zur stabilen Befestigung der Konsole an dem Achslenker umfasst die Konsole zwei Halteteile, von denen sich das eine Halteteil von der einen, und das andere Halteteil von der anderen Seite her gegen den Achslenkers abstützt. Verbunden werden die beiden Halteteile durch ein Zugelement, vorzugsweise eine Schraube oder einen Schraubbolzen. Das als eine unterhalb des Achslenkers angeordnete Querachse ausgebildete Zugelement verbindet die beiden Halteteile, und beaufschlagt die Halteelemente vorzugsweise mit einer gegeneinander gerichteten Kraft.

Diese Maßnahmen ermöglichen eine einfache Montage der Konsole mit nur wenigen Handgriffen. Insbesondere ist es möglich, die Konsole gegen eine Konsole mit anderen Maßen und/oder Geometrien auszutauschen, um so fahrzeugspezifische Anpassungen vornehmen zu können. Zudem eignet sich die beschriebene Bauweise in besonderer Weise für eine Nachrüstung des Achslifts an einer vorhandenen, bisher noch nicht mit einer Anhebevorrichtung versehenen Fahrzeugachse.

Mit einer Ausgestaltung wird vorgeschlagen, dass die Halteteile jeweils mit einer Formstruktur zur formschlüssigen Verbindung mit einer entsprechenden Gegenstruktur an der jeweiligen Seite des Achslenkers versehen sind. Die Formstruktur kann z. B. ein Zapfen innen an dem Halteteil sein, und die Gegenstruktur ein diesen Zapfen aufnehmendes Sackloch oder auch eine Einsenkung in der betreffenden Seite des Achslenkers. Eine solche Gegenstruktur schwächt den Achslenker nicht, zumindest nicht in einem ins Gewicht fallenden Maß. Bereits bei der Herstellung des Achslenkers als z.B. Gieß- oder Schmiedeteil lässt sich die Gegenstruktur mit Herstellen. Alternativ ist es möglich, die Einsenkungen in einem gemeinsamen Fertigungsschritt mit der ohnehin erforderlichen Herstellung des Lenkerauges des Achslenkers herzustellen.

Um eine Schwächung des Achslenkers durch Verringerung seines Achslenkerquerschnitts zu vermeiden, sollte die Tiefe der Sacklöcher bzw. Einsenkungen nicht größer sein, als ein Viertel der Breite des Achslenkers in diesem Bereich.

Mit einer weiteren Ausgestaltung wird vorgeschlagen, dass sich die Konsole mit einer daran ausgebildeten Fläche, die sich zwischen dem Zugelement und den Formstrukturen befindet, gegen die Unterseite des Achslenker abstützt.

Die Konsole setzt sich aus mindestens drei Teilen zusammen. Bei der dreiteiligen Ausführung stützen sich die beiden Halteteile im Bereich des Zugelements unmittelbar gegeneinander ab, wobei die Abrollfläche bzw. Druckaufnahme teils an dem einen, und teils an dem anderen Halteteil ausgebildet ist.

Alternativ kann die Konsole aus mindestens vier Einzelteilen zusammengesetzt sein. In diesem Fall sind die zwei Halteteile plattenartig gestaltet, und die Abrollfläche bzw. Druckaufnahme ist an einem Zwischenstück ausgebildet, welches zwischen den Halteteilen befestigt ist, vorzugsweise mittels des das Zugelement bildenden Schraubbolzens.

Mit weiteren Ausgestaltungen wird vorgeschlagen, dass sich das Zwischenstück von unten flächig gegen den Achslenker abstützt, und dass das Zwischenstück mit einer Querbohrung versehen ist, durch die hindurch sich das Zugelement erstreckt.

Weitere vorteilhafte Ausgestaltungen, Einzelheiten und Vorteile der Erfindung ergeben sich aus der nachfolgenden Beschreibung von Ausführungsbeispielen anhand der Zeichnungen. Darin zeigen:
- Figur 1: in einer Seitenansicht Teile einer luftgefederten Achsaufhängung einschließlich einer Anhebevorrichtung für einen schwenkbar in einer Stütze gelagerten Achslenker, der als Längslenker eine Fahrzeugachse führt;
- Fig. 2: die Gegenstände nach Fig. 1 in einer perspektivischen Darstellung;
- Fig. 3: einen Schnitt durch den Achslenker mit daran befestigter Konsole entsprechend der Schnittlinie III-III in Fig. 1;
- Fig. 4: in einer zweiten Ausführungsform einen vergleichbaren Schnitt durch den Achslenker mit einer daran befestigten Konsole;
- Fig. 5A: in einer dritten Ausführungsform einen vergleichbaren Schnitt durch den Achslenker mit einer daran befestigten Konsole;
- Fig. 5B: einen Schnitt gemäß der Schnittebene V - V in Fig. 5A;
- Fig. 6A: in einer vierten Ausführungsform einen vergleichbaren Schnitt durch den Achslenker mit einer daran befestigten Konsole;
- Fig. 6B: eine Längsschnitt gemäß der Schnittebene VI - VI in Fig. 6A und
- Fig. 6C: denselben Längsschnitt im Fall von Anhebekraft F.

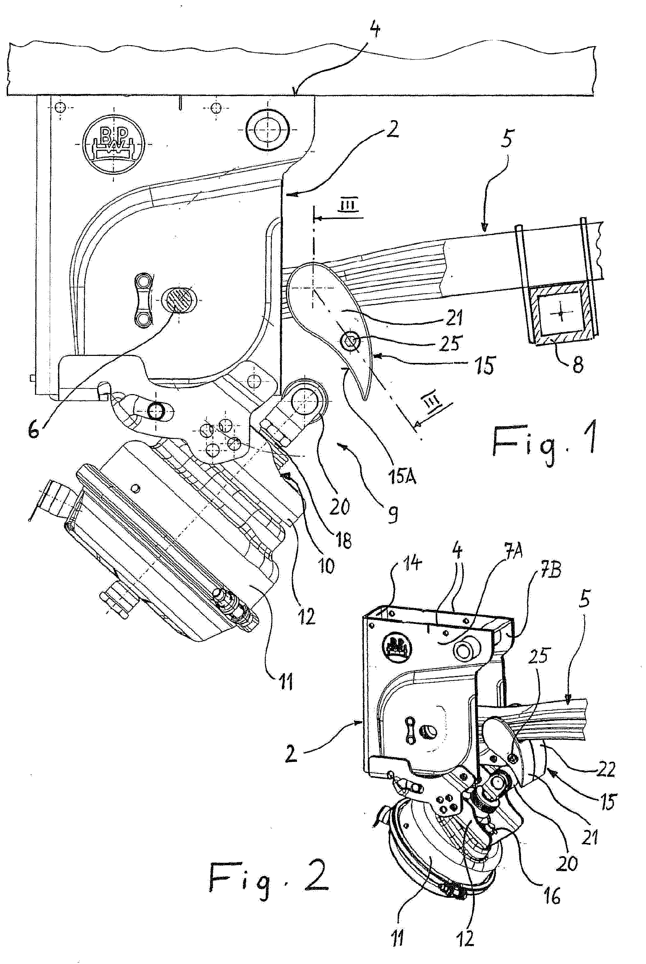

Die Fign. 1 und 2 zeigen die Achsaufhängung eines Lkw-Anhängers oder -Aufliegers. Unter dem Fahrzeugrahmen sind links und rechts jeweils Stützen 2 befestigt, z. B. durch Verschweißen ihres oberen Randes 4 mit der Unterseite des Längsträgers des Fahrzeugrahmens. In jeder Stütze 2 ist, schwenkbar um einen Bolzen 6, ein Achslenker bzw. Längslenker 5 der Fahrzeugachse schwenkbar gelagert.

Der Achslenker bzw. Längslenker 5 ist als Gießteil aus Stahlguss oder Leichtmetallguss, oder als Schmiedeteil oder durch Walzen ausgebildet bzw. hergestellt. Sein vorderes Ende ist als Lenkerauge gestaltet, in dem eine Gummibuchse oder eine Gummi-Stahl-Buchse sitzt. Durch diese sowie durch die Seitenwände 7A, 7B der Stütze 2 hindurch erstreckt sich der Bolzen 6. An seinem rückwärtigen Ende ist jeder der beiden Achslenker 5, was die Zeichnung nicht zeigt, mit einer Befestigungsfläche für einen Luftfederbalg einer Luftfederung versehen.

An jedem Achslenker 5 ist eine Achsaufnahme ausgebildet, über die der Achslenker 5 mit dem quer zum Achslenker 5 angeordneten Achskörper 8 der Fahrzeugachse verbunden ist. Der Achskörper 8, vorzugsweise ein Achsrohr, ist von der linken bis zur rechten Fahrzeugseite durchgehend gestaltet und trägt an seinen beiden Enden auf Achsschenkeln die Radlagerungen der Fahrzeugräder.

Die Stütze 2 ist im Querschnitt U-förmig gestaltet und setzt sich aus zwei zueinander im Wesentlichen parallelen Seitenwänden 7A, 7B und einer nach vorne in Fahrtrichtung weisenden Stirnwand 14 zusammen. Nach hinten und nach unten hin ist die Stütze 2 offen. Die Seitenwände 7A, 7B der Stütze sind mit Löchern versehen. Durch diese Löcher sowie durch das Lenkerauge des Achslenkers 5 führt der Bolzen 6 hindurch, und bildet so die Schwenkachse für den Achslenker 5.

Über eine Anhebevorrichtung 9, im folgenden auch als Achslift bezeichnet, lässt sich die in Fig. 1 in der Fahrstellung dargestellte Fahrzeugachse, falls sie für den Fahrbetrieb nicht gebraucht wird, in eine angehobene Stellung heben. Wichtiger Bestandteil der Anhebevorrichtung 9 ist ein mit Druckluft betriebener Membranzylinder 11, der mittels einer Konsole 12 starr an der Stütze 2 angeordnet ist. Die Konsole 12 ist mit einer Abstützung 10 zur Befestigung des Membranzylinders 11 versehen. Bestandteile der Abstützung 10 sind zu beiden Seiten einer Öffnung an der Konsole angeordnete Schrauben 16, die den Membranzylinder 11 starr an der Konsole 12 befestigen.

Als achsseitiges Widerlager zur Aufnahme des Hebedrucks bzw. der Hebekraft lässt sich der Achslenker 5 an seiner Unterseite mit einer Konsole 15 versehen, an der als Druckaufnahme 15A eine gekrümmte Abrollfläche ausgebildet ist. Die Konsole 15 ist, baulich betrachtet, Bestandteil des Achslenkers 5, hingegen funktional betrachtet auch Bestandteil des Achslifts 9.

Der Membranzylinder 11 ist das Kraftglied des Achslifts 9. Sein Gehäuse ist mit Hilfe der Verschraubungen 16 starr an der Konsole 12 abstützt. Hierbei ragt ein Teil des Membranzylinders 11 durch die Öffnung in der Konsole 12 nach schräg oben. In diesem Bereich befindet sich eine Axialführung für eine aus dem Membranzylinder 11 heraus führende, durch das Druckmittel im Membranzylinder angetriebene Kolbenstange 18. Bei der Axialführung handelt es sich um eine Kunststoffbuchse, welche die Kolbenstange 18 auf einem gewissen Teil ihrer Länge axial führt. An ihrem Ende ist die Kolbenstange 18 mit einer wälzgelagerten, frei drehbaren Rolle 20 versehen.

Bei Betätigung des Kraftglieds 11 mittels Druckluft kommt es durch die gemeinsam eine Druckübertragung bildende Einheit aus Kolbenstange 18 und Rolle 20 zu einer nach schräg oben gerichteten Bewegung in Richtung der gegenüberliegend an dem Achslenker 5 befestigten Konsole 15, bis die Rolle 20 an der Druckaufnahme 15A zur Anlage kommt. Bei weiterem Druck wird der Achslenker 5 um den Bolzen 6 nach oben geschwenkt, und die Achse einschließlich der Fahrzeugräder angehoben.

Außerhalb des Achsliftbetriebs ist die aus Kolbenstange und Rolle zusammengesetzte Druckübertragung 18, 20 in Richtung zum Membranzylinder 11 zurückgezogen, wodurch die Rolle 20 in keinerlei Kontakt zu der Druckaufnahme 15A am Achslenker 5 steht. Der Achslenker 5 kann sich also frei entsprechend den Fahrbedingungen bewegen.

Die als Abrollfläche 15A dienende Stützkontur an der Konsole 15 ist hier eine zu der Rolle 20 hin konkav gekrümmte Evolvente. Die Evolvente ist dergestalt, dass die Flächennormale jenes Ortes, an dem die Rolle 20 an der Abrollfläche 15A anliegt, exakt mit der Längsachse der Kolbenstange 18 zusammenfällt. Durch diese Ausrichtung und geometrische Gestaltung der beteiligten Bauteile wird erreicht, dass keine oder allenfalls sehr geringe Querkräfte auf die Rolle 20 und damit auf die Kolbenstange 18 ausgeübt werden. Gleichwohl kann es sinnvoll sein, die Kolbenstange 18 axial zu führen, wozu nahe dem Austritt der Kolbenstange 18 aus dem Gehäuse des Membranzylinders 11 die bereits erwähnte Axialführung an dem Gehäuse des Membranzylinders 11 befestigt ist. Alternativ kann die achslenkerseitige Druckaufnahme 15A auch als korrespondierende Kalotte in Verbindung mit einer dann schwenkbaren Kolbenstange 18 ausgebildet sein, oder mit jeder anderen geeigneten geometrischen Paarung.

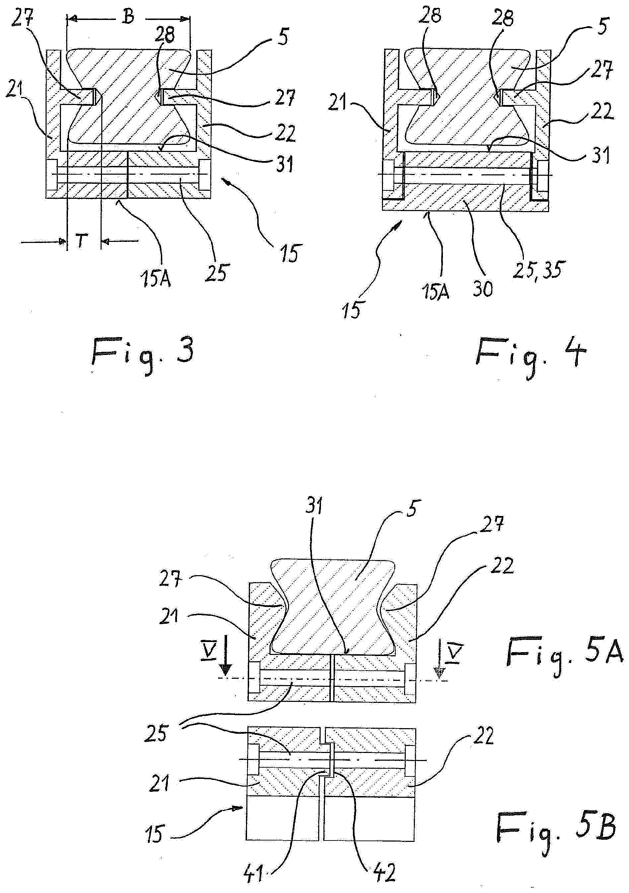

Die Figur 3 zeigt einen Querschnitt durch die Konsole 15 und den Achslenker 5 entsprechend der Schnittlinie III-III in Fig. 1. Die Konsole 15 ist im Wesentlichen dreiteilig aufgebaut, und besteht aus einem linken Halteteil 21, einem rechten Halteteil 22 und einem unterhalb des Achslenkers 5 eine Querachse bildenden Zugelement 25. Als Zugelement 25 dient hier ein Schraubbolzen, der durch beide Halteteile 21, 22 hindurchführt, diese verbindet und sie vorzugsweise mit einer Zugkraft beaufschlagt, welche ausreicht, um unterhalb des Achslenkers 5 die Halteteile 21, 22 gegeneinander zu ziehen, und sie so miteinander zu verbinden.

Das erste Halteteil 21 kann mit einer daran ausgebildeten Fläche gegen die linke Seite des Achslenkers 5 abgestützt sein, das zweite Halteteil 22 entsprechend gegen die andere, rechte Seite des Achslenkers 5. Die Abstützung ist aber nicht zwingend, und daher in Fig. 3 nicht dargestellt.

Die Halteteile 21, 22 sind, einander zugewandt, jeweils mit einer Formstruktur 27 in Gestalt eines innen an dem jeweiligen Halteteil ausgebildeten Zapfens versehen. Korrespondierend zu dieser Formstruktur 27 ist der Achslenker 5 mit einer entsprechenden Gegenstruktur 28 versehen. Bei der Gegenstruktur 28 handelt es sich um eine Einsenkung in der betreffenden Seite des Achslenkers 5. Anstelle einer Einsenkung kann hier auch z. B. ein Sackloch vorhanden sein, welches dann die betreffende Formstruktur 27 des Halteteils 21 bzw. 22 formschlüssig aufnimmt.

Um den Querschnitt des Achslenkers 5 nicht unnötig zu schwächen, sollte die Einsenkung 28 nur von geringer Tiefe T sein. Vorzugsweise beträgt die Tiefe T nicht mehr, als ein Viertel der Breite B des Achslenkers 5 in diesem Bereich. Zur Formung der Einsenkung 28 bedarf es, z. B. im Fall eines im Schmiedeverfahren hergestellten Achslenkers 5, keines eigenen Fertigungsschritts.

Sollte der Querschnitt des Achslenkers 5 groß genug sein, kann auch in diesem eine Durchgangsbohrung, welche mit dem Zugelement 25 durchsetzt ist, eingebracht werden.

Für eine flächenpressungsarme Übertragung der Achshebekräfte auf den Achslenker kann vorgesehen sein, dass sich die Konsole 15 mit einer daran ausgebildeten Fläche 31 von unten an dem Achslenker 5 abstützt. Bei Fig. 3 allerdings ist diese Abstützung nicht dargestellt. Die Fläche 31 befindet sich zwischen dem Zugelement 25 und den Formstrukturen 27. Die Fläche 31 ist aufgeteilt, denn die eine Hälfte der Fläche 31 befindet sich an dem ersten Halteteil 21, und die andere Hälfte der Fläche 31 an dem anderen, zweiten Halteteil 22.

Auch die Druckaufnahme 15A, d. h. die gekrümmte Abrollfläche für die Rolle 20 des Achslifts, ist teils an dem ersten Halteteil 21, und teils an dem zweiten Halteteil 22 ausgebildet.

Bei der Ausführungsform nach Fig. 4 sind die beiden Halteteile 21, 22 jeweils im Wesentlichen plattenförmig gestaltet. Die Druckaufnahme 15A befindet sich hier nicht unten an den Halteteilen selbst, sondern an einem Zwischenstück 30, welches als zusätzliches Bauteil zwischen den beiden Halteteilen 21, 22 befestigt ist. Das Zwischenstück 30 befindet sich unterhalb des Achslenkers 5 und kann sich zur Übertragung der Anhebekraft mit seiner Oberseite 31 von unten flächig gegen den Achslenker abstützen.

Das Zwischenstück 30 ist mit einer Querbohrung 35 versehen, durch die hindurch sich das als Querachse dienende Zugelement 25 erstreckt. Das Zugelement 25, hier wiederum ein Schraubbolzen, durchdringt zugleich beide Halteteile 21, 22 und das mittig dazwischen angeordnete Zwischenstück 30, und kann diese drei Teile daher gegeneinander ziehen und vorzugsweise gegeneinander verspannen.

Die Figuren. 5A und 5B zeigen eine der Fig. 3 ähnliche Ausführungsform der Erfindung, bei der die Konsole 15 wiederum im Wesentlichen dreiteilig aufgebaut ist. Die beiden Halteteile 21, 22 sind zusätzlich mit Formschlussstrukturen 41, 42 versehen, so dass sie in Verbindung mit dem Zugelement 25 zueinander starr und unbeweglich verriegelt sind.

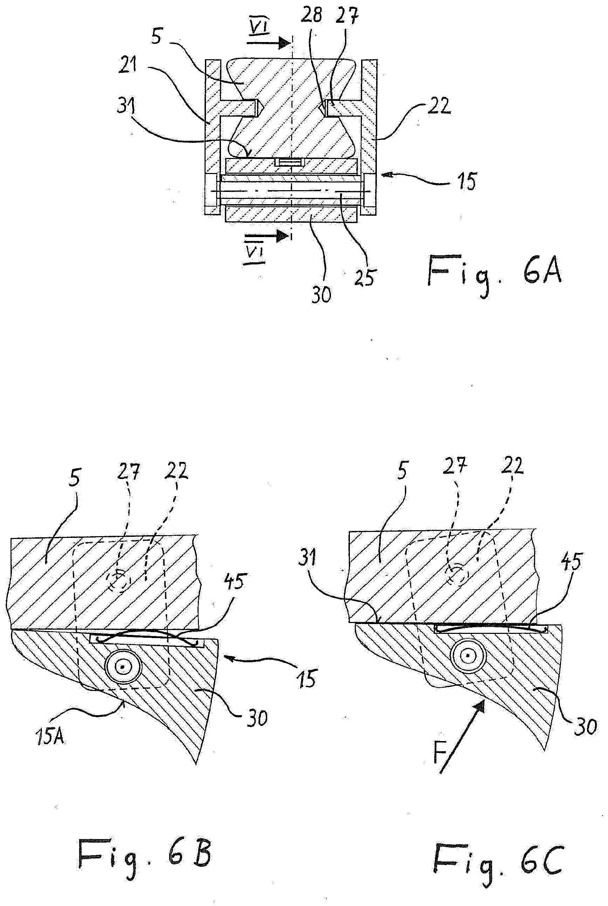

Die Figuren. 6A bis 6C zeigen eine der Fig. 4 ähnliche Ausführungsform der Erfindung, bei der allerdings das Zwischenstück 30 mit der Druckaufnahme 15A nicht fest zwischen den zwei Halteteilen 21, 22 eingespannt ist, sondern auf dem Zugelement 25, das hier in erster Linie eine Querachse bildet, schwenkbeweglich gelagert ist.

Damit es im Fahrbetrieb bei fehlender Anhebekraft F zu keinen Relativbewegungen gegenüber dem Achslenker 5 und damit zu einem Klappern kommt, stützt sich an dem Zwischenstück 30 einerseits und an der Unterseite des Achslenkers 5 andererseits ein elastisches Element 45, hier eine Feder, ab.

### Bezugszeichenliste

- 2: Stütze
- 5: Achslenker (Längslenker)
- 4: Rand der Stütze
- 5: Achslenker
- 6: Bolzen
- 7A: Seitenwand
- 7B: Seitenwand
- 8: Achskörper
- 9: Anhebevorrichtung (Achslift)
- 10: Abstützung
- 11: Kraftglied, Membranzylinder
- 12: Konsole
- 13: Öffnung
- 14: Stirnwand
- 15: Konsole
- 15A: Druckaufnahme, Abrollfläche
- 16: Schraube
- 18: Kolbenstange
- 20: Rolle
- 21: Halteteil
- 22: Halteteil
- 25: Querachse, Zugelement
- 27: Formstruktur
- 28: Gegenstruktur
- 30: Zwischenstück
- 31: Fläche
- 35: Querbohrung
- 41: Formschlussstruktur
- 42: Formschlussstruktur
- 45: elastisches Element

- B: Breite
- F: Anhebekraft
- T: Tiefe

## Patentansprüche

1. Achslenker für eine bei Nichtgebrauch mittels eines Achslifts anhebbare Fahrzeugachse, wobei achslenkerseitiger Bestandteil des Achslifts eine starr an dem Achslenker (5) befestigte Konsole (15) ist, an der eine Druckaufnahme (15A) zur Anlage eines Kraftglieds des Achslifts ausgebildet ist, **dadurch gekennzeichnet, dass** Bestandteile der Konsole (15) ein gegen die eine Seite des Achslenkers (5) abgestütztes erstes Halteteil (21), ein gegen die andere Seite des Achslenkers (5) abgestütztes zweites Halteteil (22), und ein die beiden Halteteile (21, 22) verbindendes Zugelement (25) sind, und dass das Zugelement (25) als eine unterhalb des Achslenkers (5) angeordnete Querachse ausgebildet ist.

2. Achslenker nach Anspruch 1, **dadurch gekennzeichnet, dass** das Zugelement (25) die Halteteile (21, 22) mit einer gegeneinander gerichteten Kraft beaufschlagt.

3. Achslenker nach Anspruch 1 oder 2, **dadurch gekennzeichnet, dass** die Halteteile (21, 22) jeweils mit einer Formstruktur (27) zur formschlüssigen Verbindung mit einer entsprechenden Gegenstruktur (28) an der jeweiligen Seite des Achslenkers (5) versehen sind.

4. Achslenker nach Anspruch 3, **dadurch gekennzeichnet, dass** die Formstruktur (27) ein an dem Halteteil (21, 22) ausgebildeter Zapfen, und die Gegenstruktur (28) ein Sackloch oder eine Einsenkung in der betreffenden Seite des Achslenkers (5) ist.

5. Achslenker nach einem der Ansprüche 3 oder 4, **dadurch gekennzeichnet, dass** sich die Konsole (15) mit einer daran ausgebildeten Fläche (31), die sich zwischen dem Zugelement (25) und den Formstrukturen (27) befindet, von unten gegen den Achslenker (5) abstützt.

6. Achslenker nach einem der Ansprüche 1 - 5, **dadurch gekennzeichnet, dass** sich die Halteteile (21, 22) im Bereich des Zugelements (25) unmittelbar gegeneinander abstützen, und dass die Druckaufnahme (15A) teils an dem einen und teils an dem anderen Halteteil (21, 22) ausgebildet ist.

7. Achslenker nach einem der Ansprüche 1 - 5, **dadurch gekennzeichnet, dass** die Halteteile (21, 22) plattenartig gestaltet sind, und dass die Druckaufnahme (15A) an einem Zwischenstück (30) ausgebildet ist, welches zwischen den Halteteilen (21, 22) befestigt ist.

8. Achslenker nach Anspruch 7, **dadurch gekennzeichnet, dass** sich das Zwischenstück (30) von unten gegen den Achslenker (5) abstützt.

9. Achslenker nach Anspruch 7 oder 8, **dadurch gekennzeichnet, dass** das Zwischenstück (30) mit einer Querbohrung (35) versehen ist, durch die hindurch sich das Zugelement (25) erstreckt.

## Claims

1. Axle guide for a vehicle axle which can be raised by means of an axle lift when not in use, an axle guide-side constituent part of the axle lift being a bracket (15) which is fastened rigidly to the axle guide (5) and on which a pressure absorbing means (15A) for bearing against a force element of the axle lift is configured, **characterized in that** constituent parts of the bracket (15) are a first holding part (21) which is supported against the one side of the axle guide (5), a second holding part (22) which is supported against the other side of the axle guide (5), and a tensile element (25) which connects the two holding parts (21, 22), and **in that** the tensile element (25) is configured as a transverse axle which is arranged below the axle guide (5) .

2. Axle guide according to Claim 1, **characterized in that** the tensile element (25) loads the holding parts (21, 22) with an opposed force.

3. Axle guide according to Claim 1 or 2, **characterized in that** the holding parts (21, 22) are provided in each case with a shaped structure (27) for positively locking connection to a corresponding mating structure (28) on the respective side of the axle guide (5).

4. Axle guide according to Claim 3, **characterized in that** the shaped structure (27) is a pin which is configured on the holding part (21, 22), and the mating structure (28) is a blind hole or a hollow in the relevant side of the axle guide (5).

5. Axle guide according to either of Claims 3 and 4, **characterized in that** the bracket (15) is supported from below against the axle guide (5) by way of a surface (31) which is configured on the said bracket (15) and is situated between the tensile element (25) and the shaped structures (27).

6. Axle guide according to one of Claims 1 to 5, **characterized in that** the holding parts (21, 22) are supported directly against one another in the region of the tensile element (25), and **in that** the pressure absorbing means (15A) is configured partially on the one and partially on the other holding part (21, 22).

7. Axle guide according to one of Claims 1 to 5, **characterized in that** the holding parts (21, 22) are of plate-like design, and **in that** the pressure absorbing means (15A) is configured on an intermediate piece (30) which is fastened between the holding parts (21, 22).

8. Axle guide according to Claim 7, **characterized in that** the intermediate piece (30) is supported from below against the axle guide (5).

9. Axle guide according to Claim 7 or 8, **characterized in that** the intermediate piece (30) is provided with a transverse bore (35), through which the tensile element (25) extends.

## Revendications

1. Guide d'essieu pour un essieu de véhicule relevable au moyen d'un élévateur d'essieu en cas de non-utilisation, dans lequel un composant de l'élévateur d'essieu côté guide d'essieu est une console (15) rigidement fixée au guide d'essieu (5), sur laquelle est formé un logement de pression (15A) pour l'application d'un organe de force de l'élévateur d'essieu, **caractérisé en ce que** des composants de la console (15) sont une première partie de maintien (21) s'appuyant contre le premier côté du guide d'essieu (5), une seconde partie de maintien (22) s'appuyant contre l'autre côté du guide d'essieu (5), et un élément de traction (25) reliant les deux parties de maintien (21, 22), et **en ce que** l'élément de traction (25) est réalisé sous la forme d'un axe transversal disposé en dessous du guide d'essieu (5).

2. Guide d'essieu selon la revendication 1, **caractérisé en ce que** l'élément de traction (25) agit sur les parties de maintien (21, 22) avec une force orientée en opposition l'une à l'autre.

3. Guide d'essieu selon la revendication 1 ou 2, **caractérisé en ce que** les parties de maintien (21, 22) sont dotées respectivement d'une structure de forme (27) pour la liaison par emboîtement avec une structure opposée correspondante (28) sur le côté respectif du guide d'essieu (5).

4. Guide d'essieu selon la revendication 3, **caractérisé en ce que** la structure de forme (27) est un tourillon formé sur la partie de maintien (21, 22) et la structure opposée (28) est un trou borgne ou un creux dans le côté concerné du guide d'essieu (5).

5. Guide d'essieu selon une des revendications 3 ou 4, **caractérisé en ce que** la console (15) s'appuie par le bas contre le guide d'essieu (5), avec une face (31) formée sur celle-ci, qui se trouve entre l'élément de traction (25) et les structures de forme (27).

6. Guide d'essieu selon l'une quelconque des revendications 1 à 5, **caractérisé en ce que** les parties de maintien (21, 22) s'appuient directement l'une contre l'autre dans la région de l'élément de traction (25), et **en ce que** le logement de pression (15A) est formé en partie sur la première et en partie sur la seconde des parties de maintien (21, 22).

7. Guide d'essieu selon l'une quelconque des revendications 1 à 5, **caractérisé en ce que** les parties de maintien (21, 22) sont réalisées en forme de plaques, et **en ce que** le logement de pression (15A) est formé sur une pièce intermédiaire (30), qui est fixée entre les parties de maintien (21, 22).

8. Guide d'essieu selon la revendication 7, **caractérisé en ce que** la pièce intermédiaire (30) s'appuie par le bas contre le guide d'essieu (5).

9. Guide d'essieu selon la revendication 7 ou 8, **caractérisé en ce que** la pièce intermédiaire (30) est munie d'un trou transversal (35), à travers lequel s'étend l'élément de traction (25).
